Europäisches Patentamt

European Patent Office

Office européen des brevets

(11) Publication number: **0 291 142**
**A1**

# EUROPEAN PATENT APPLICATION

(21) Application number: 88201130.7

(22) Date of filing: 08.04.88

(51) Int. Cl.⁴: **D21C 5/02** , **C12P 39/00** , **D21B 1/32**

(30) Priority: 13.04.87 NL 8700875

(43) Date of publication of application:
**17.11.88 Bulletin 88/46**

(84) Designated Contracting States:
**AT DE FR GB NL SE**

(71) Applicant: **Nederlandse Organisatie voor Toegepast Natuurwetenschappelijk Onderzoek TNO**
**P.O. Box 297**
**NL-2501 BD Den Haag(NL)**

(72) Inventor: **Doddema, Harmannus Johannes**
**Nieuwe Kade 17**
**NL-3511 RV Utrecht(NL)**
Inventor: **van der Meulen Bosma, Folkert Otto Johannes**
**Weezenhof 5206**
**Nl-6536 DZ Nijmegen(NL)**

(54) **A method of obtaining usable fibrous material with the aid of micro-organisms from paper and particularly laminated paper.**

(57) Method for recovering fibrous materials and/or laminates from paper whether is is laminated or not. The paper is fiberised by introducing it into a watery suspension comprising those micro-organisms of the type that grow on the constituents of the paper such as starch and cellulose, or which grow in chemicals such as carboxylic acid, flotation media and inks. Preferably, water used in the paper manufacturing process should be used as the watery suspension preferably having a pH and temperature of between 4 and 7 and 40°C respectively.

EP 0 291 142 A1

# A METHOD OF OBTAINING USABLE FIBROUS MATERIAL WITH THE AID OF MICRO-ORGANISMS FROM PAPER AND PARTICULARLY LAMINATED PAPER

The invention relates to a method of recovering fibrous materials and/or laminates from paper whether laminated or not in which use is made of a colony of micro-organisms with a specific biological degree of activity for attaching materials in paper or laminated paper so that these paper materials undergo fiberisation.

The most important primary raw materials for paper and cardboard manufacture are cellulose and sawdust derived from wood. The Netherlands possesses too few productive forests to satisfy the domestic need for these raw materials so that they must be imported for the greater part. In order to reduce dependence on these imports, research has been carried out into the use of domestic fibre sources such as straw (primary fibres) and waste paper (secondary fibres). The whole of the straw-processing cardboard industry has changed over to processing waste-paper fibres for techno-environmental sons (waste-water pollution amongst others); in this process the waste paper is first mechanically pulped. Not every kind of waste paper is suitable for this form of recycling however. The kinds of waste paper containing contaminants which are hard to remove (for example dairy product and fruit juice cartons containing polythene and aluminium laminates) can only be fiberised with extra effort (chemical, mechanical and/or thermal) whilst at the same time these laminates can also cause problems during during the processing of these quoted kinds of waste paper in the production of other paper and cardboard. However, these kinds of waste paper contain so high a percentage (70-90%) of qualitatively good fibres that they are interesting as potential secondary raw materials. Here again however, if these kinds of waste paper are encountered in well recyclable waste paper they can cause great problems in cleaning and processing.

The normal method of processing waste paper to provide it with a fibrous structure is to pulp it using only mechanical energy for this purpose. The invention is based on the view that fibres can be effectively freed by the biological action of micro-organisms in addition to which high-quality fibrous materials can be freed from laminated paper by micro-organisms, a process that is not possible using other methods.

The great advantage of micro-biological fiberisation is that no extra chemicals are necessary and that less pulping energy is used. The result hereof is that such a micro-biological pulping process works in an environmentally-friendly and energy saving manner. In order to obtain a good biological fiberisation, a colony or mixed-colony of micro-organisms is used. These attack the paper structure so that there is no unacceptable loss of fibres. Such micro-organisms are fungi and/or bacteria which can grow in the media present in the processing water and such as starch, cellulose, lignite, long-chained carboxylic acids, inks and/or flotation media. The micro-organisms are cultivated on the quoted media and then mixed. Natural mixed colonies are used preferably. A mixed colony such as this appears to be present in paper manufacturing process water which contains approximately 10% paper, de-inking chemicals, an acidity pH of 7 or 4 and a temperature of approximately 40°C.

The micro-organisms need feeding to the process in sufficient concentrations. It appears that a concentration should preferably be chosen in which a natural mixed colony is present in the paper manufacturing process water.In the case of lower concentrations, the necessary contact time between the micro-organisms and the paper must be considerably extended from some hours to one or more days for example.

The process water acidity level for biological fiberisation and further processing should be set between pH 3 and pH 10, preferably around and pH 4 to pH 7. The temperature should be set between 15°C and 60°C,preferably around 40°c. Mixed colony growth takes place under these circumstances and exhibits high activity during the fiberisation process. Non-lamintated paper such as newspaper for example need not be mechanically reduced in size in order to rapidly obtain good micro-biological fiberisation. Laminated kinds of paper such that used for milk and fruit juice containing cartons, and cigarette packing paper need firstly to be mechanically reduced in size to rapidly obtain good micro-biological fiberisation.

## AN EXEMPLARY EMBODIMENT.

The paper or cuttings are fiberised in several hours in the qouted micro-organism containing process water with a consistency of several percent by weight, typically around 5 percent by weight. After an incubation period of between 1 to 48 hours, the micro-biologically freed fibres from the laminate residues can be separated by separating techniques such as filtration or flotation. The weight loss amounts to between 5 and 15% approximately, typically 10% and is caused by loss of fibrous matter and/or filling media.

In making test sheets from fibres such as are obtained on a laboratory scale according to the method described herein it appears that these test sheets exhibit little or no loss at all of their tensile strength or shearing strength with respect to those of the base material used. This indicates that the usable fibres have indeed been recovered. Waste paper or laminated paper that have not come into contact with the micro-organisms exhibit hardly any or no fiberisation at all.

## Claims

1. A method for recovering fibrous materials and/or laminates from paper of laminated paper, characterised in that the paper is fiberised by introducing it into a watery suspension comprising micro-organisms of the type that grow on paper constituents such as starch and cellulose or in chemicals such as carboxylic acid, flotation media and inks.

2. A method as claimed in claim 1, characterised in that the watery suspension has a pH of between 3 and 10 and preferably between 4 and 7, and a temperature of between 15°C and 60°C and preferably 40°C.

A method as claimed in claim 1 or claim 2, characterised in that the concentration of the micro-organisms is adapted to the desired time of the fiberising process.

4. A method as claimed in any one of the foregoing claims, characterised in that in the paper manufacturing process, water is used as the water suspension comprising the micro-organisms.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-1 495 029 (C. MUMFORD)<br>* Whole document *<br>--- | 1-4 | D 21 C 5/02<br>C 12 P 39/00<br>D 21 B 1/32 |
| A | ABSTRACT BULLETIN OF THE INSTITUTE OF PAPER CHEMISTRY, vol. 57, no. 9, March 1987, page 1359, no. 12373, Appleton, WI, US; & JP-A-171 772/86 (Y. FUJIMORI et al.) 02-08-1986<br>* Abstract, lines 1-7 *<br>--- | 1,2 | |
| A | DE-A-2 262 872 (GELSENBERG AG)<br>* Whole document *<br>--- | 1,2 | |
| A | EP-A-0 089 169 (APPLETON PAPERS INC.)<br>* Abstract *<br>--- | 1,2 | |
| A | US-A-3 652 383 (J.W. DE VOS)<br>* Examples 1-5 *<br>--- | | |
| A | TAPPI, vol. 63, no. 4, April 1980, page 19, Atlanta, US; "Enzymes can reduce production costs"<br>* Page 19, left-hand column; middle column, paragraphs 1,2,3 *<br>--- | | TECHNICAL FIELDS SEARCHED (Int. Cl.4)<br><br>C 12 N<br>D 21 B<br>D 21 C |
| A | ABSTRACT BULLETIN OF THE INSTITUTE OF PAPER CHEMISTRY, vol. 55, no. 8, February 1985, page 991, no. 9447, Appleton, Wisconsin, US; & JP-A-9 299/84 (KAO SOAP CO., LTD) 18-01-1984<br>----- | | |

The present search report has been drawn up for all claims

| Place of search | Date of completion of the search | Examiner |
|---|---|---|
| THE HAGUE | 06-07-1988 | NESTBY K. |

CATEGORY OF CITED DOCUMENTS

X : particularly relevant if taken alone
Y : particularly relevant if combined with another document of the same category
A : téchnological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)